# EUROPÄISCHE PATENTSCHRIFT

(11) **EP 0 794 003 B1**
(45) Veröffentlichungstag und Bekanntmachung des Hinweises auf die Patenterteilung: **08.03.2000**
(21) Anmeldenummer: 96119913.0
(22) Anmeldetag: 12.12.1996
(51) Int. Cl.: B01J 20/34, B01D 15/00, C02F 1/28, C02F 9/00

(54) **Verfahren zur Entfernung von Ethern und polycyclischen aromatischen Kohlenwasserstoffen aus Grundwasser**
Process for the removal of polycyclic aromatic hydrocarbons from groundwater
Procédé pour écarter des hydrocarbures aromatiques polycycliques des eaux souterraines

(30) Priorität: 09.02.1996 DE 19604685
(43) Veröffentlichungstag der Anmeldung: 10.09.1997
(73) Patentinhaber: Degussa-Hüls Aktiengesellschaft, 60287 Frankfurt am Main (DE)
(72) Erfinder: Grund, Gerda, Dr., 48249 Dülmen (DE); Kahsnitz, John, Dr., 45721 Haltern (DE)

(56) Entgegenhaltungen:
- EP-A- 0 432 787
- EP-A- 0 701 971
- DE-A- 4 204 573
- DE-A- 19 509 684
- DATABASE WPI Week 8723 Derwent Publications Ltd., London, GB; AN 87-157672 XP002034776 & DD 242 800 A (VEB WERK FERNSEHELEKTRONIC)
- DATABASE WPI Week 8804 Derwent Publications Ltd., London, GB; AN 88-021907 XP002034777 & DD 249 190 A (VEB CHEMIEKOMB BITTERFELD)

## Beschreibung

Die Erfindung betrifft ein neuen Verfahren zur Entfernung von Ethern und polycyclischen aromatischen Kohlenwasserstoffen aus Grundwasser.

Über die Aufarbeitung von Grundwasser ist wenig bekannt. Dabei erscheinen zunehmend alarmierende Nachrichten über die Verseuchung von Grund- und Trinkwasservorkommen mit organischen Bestandteilen und insbesondere mit chlorierten Lösemitteln.

Für die Reinigung von Abwässern oder von industriellen Prozeßwässern werden dagegen mehrere Methoden angeboten. Dabei geht es allerdings um die Reduzierung von um Größenordnungen höheren Schadstoffkonzentrationen. Das Ziel ist hier, Wasser umweltverträglich abzugeben oder Wasser oder eine wäßrige Lösung wiederzuverwenden. Man hat dabei nicht die Absicht, Trinkwasser aufzubereiten.

In "Neuere Verfahrenstechnologien in der Abwasserreinigung, Abwasser- und Gewässerhygiene", R. Oldenbourg Verlag München Wien 1984, werden auf den Seiten 235 bis 251 mehrere Methoden zur Behandlung von Chlorkohlenwasserstoffe enthaltendem Abwasser aus Chlorierungsanlagen beschrieben. Nach einem Verfahren wird das Abwasser zunächst alkalisch gestellt (pH 11). Die anschließende Strippung, die durch Einblasen von Wasserdampf im Gegenstrom durchgeführt wird, ergibt ein Destillat, das nach Kondensation in eine Chlorkohlenwasserstoff-Phase und eine wäßrige Phase zerfällt. Am Sumpf des Strippers (Oxistripper) fällt ein Abwasser an, das anschließend biologisch gereinigt wird.

In speziellen Fällen kann auch ein Abwasser mit einem pH-Wert von 1 bis 2 einer Strippung mit Wasserdampf im Gegenstrom unterworfen werden. Am Sumpf dieses Strippers fällt ein Wasser mit einem hohen Eisen- und Salzsäuregehalt an, das zur weiteren Aufarbeitung einer chemisch-mechanischen Kläranlage zugeführt wird.

Die Reinigung von Chlorkohlenwasserstoffe enthaltendem Grubenabwasser wird hier in einer Adsorberharzanlage durchgeführt. Dabei wird das Grubenabwasser, nachdem es peinlichst von Feststoffen befreit wurde, durch ein Adsorberharz auf der Basis eines Divinylbenzol/Styrol-Copolymers geleitet. Zur Reaktivierung erfolgt eine Dampfdesorption. Da nach diesem Verfahren nach einem Jahr eine erhebliche Aktivitätsabnahme wegen irreversibler Eisenablagerungen zu verzeichnen war, wurde eine Neuanlage bei pH 1,5 betrieben.

Nach Technische Mitteilungen 77 (1984), 525 - 526, sind Styrol-Copolymere oder Polyacrylsäureester dazu geeignet, aliphatische und aromatische Kohlenwasserstoffe, chlorierte Kohlenwasserstoffe, Phenole, Pestizide und Tenside aus Abwässern zu entfernen. Die Regenerierung der Harze erfolgt danach mit Dampf. Bei Pestiziden wird jedoch mit Hilfe von Lösemitteln, wie Aceton oder Methanol, oder mit anorganischen Chemikalien regeneriert.

In DD 249 190 wird mit organischen Substanzen verunreinigte Salzsäure, die aus Chlorierungsprozessen stammt, mit Hilfe von hydrophilen, nachvernetzten Divinylbenzol/Styrol-Copolymeren, die vorzugsweise eine innere Oberfläche von 1 000 bis 1 600 m²/g aufweisen, gereinigt. Die Regenerierung des Harzes erfolgt hier mit 130 °C heißem Wasserdampf, wobei die Desorption der gebundenen organischen Stoffe auch mit Lösemitteln, wie Alkoholen und Ketonen, vorgenommen werden kann.

In EP-A-0 432 787 werden wasserlösliche organische Verbindungen aus Abwasser durch Filtration, Adsorption der organischen Bestandteile an ein Adsorberharz und nachfolgende Desorption, beispielsweise mit Hilfe von Isopropanol und Wasser, entfernt.

Nach DE-A-42 04 573 können u. a. auch kontaminierte Grundwässer dadurch gereinigt werden, daß man zunächst ungelöste Feststoffe filtriert und dann organische Bestandteile an ein nachvernetztes Divinylbenzol/Styrol-Copolymer adsorbiert, worauf mit Wasserdampf desorbiert wird. Der Wasserdampfdesorption kann eine Verdrängungsdesorption mit einem organischen Lösungsmittel, das auch eine Carbonsäure sein kann, vorgeschaltet werden, wenn hochsiedende und in Wasser schwer lösliche Verunreinigungen entfernt werden sollen.

Durch die angegebenen Reinigungsverfahren werden hinsichtlich einzelner Schadstoffkomponenten Konzentrationen von < 0,1 mg/l erreicht. Die Gesamtmenge an organischen Bestandteilen oder an Chlorkohlenwasserstoffen liegt aber nach der Reinigung bestenfalls im Bereich von einigen mg/l bzw. von einigen ppm.

Aufgabe der vorliegenden Erfindung war es nun, mit Ethern und polycyclischen aromatischen Kohlenwasserstoffen belastetes Grundwasser so zu reinigen, daß es ohne Bedenken fließenden Oberflächengewässern zugegeben werden kann. Das gereinigte Wasser könnte dabei als Kühlwasser oder für die Dampferzeugung und gegebenenfalls nach einer biologischen Reinigung auch zur Trinkwassergewinnung geeignet sein. Im besonderen sollte der Anteil der Ether auf unter 10 µg/l und der der polycyclischen aromatischen Kohlenwasserstoffe auf unter 5 µg/l gesenkt werden.

Außerdem sollte ein Reinigungsverfahren, das aus einer Abtrennung fester Bestandteile, Adsorption der organischen Verbindungen an ein Adsorberharz und Desorption der adsorbierten Verbindungen mit Wasserdampf besteht, weiter verbessert werden.

Die Aufgabe wird erfindungsgemäß dadurch gelöst, daß man nach der Desorption das Adsorberharz mit einer Säure regeneriert.

Während die gestellte Aufgabe durch Strippen oder durch Oxidation mit H₂O₂ bei UV-Bestrahlung nicht gelöst wird, gelingt die Senkung des Gehalts der genannten organischen Bestandteile im Grundwasser überraschend nach dem erfindungsgemäßen Verfahren. Angesichts der bekannten Ergebnisse bei der Reinigung von Industrieabwässern und von Salzsäure überrascht es, daß die Gehalte der Substanzen im Grundwasser nach dem neuen Verfahren auf um 2 bis 3 Zehnerpotenzen niedrigere Werte gesenkt werden können.

Die Abtrennung der festen Bestandteile, vor allem von Schwebstoffen, erfolgt im allgemeinen durch Filtration. Dabei sind vor allem Sand- aber auch Stoff- und Papierfilter geeignet. Das zu reinigende Grundwasser kann bei der adsorptiven Reinigung bei seinem ursprünglichen pH-Wert belassen werden. Vorzugsweise liegt der pH-Wert bei 1 bis 10, wobei pH-Werte von 3 bis 7,5 ganz besonders bevorzugt werden.

Ether, die in belastetem Grundwasser enthalten sein können, sind beispielsweise Dibutylether, Tetrahydrofuran, p-Toluylether oder halogenierte aliphatische Ether, wie Di(chlorisopropyl)ether oder Di(chlorethyl)ether.

Polycyclische aromatische Kohlenwasserstoffe sind beispielsweise Naphthalen, Acenaphthylen, Acenaphthen, Fluoren, Phenanthren, Anthracen, Fluoranthen, Pyren oder Chrysen.

Geeignete Adsorberharze sind vor allem Divinylbenzol/Styrol-Copolymere, wobei Produkte mit einer spezifischen Oberfläche von 600 bis 1 200 m²/g und im besonderen von 700 bis 900 m²/g bevorzugt werden. Verwendbar sind jedoch auch andere Polymere, die organische Verbindungen adsorbieren können.

Die Adsorption erfolgt im allgemeinen bei 15 bis 35 °C. Die Desorption mit Wasserdampf wird meist bei 100 bis 150 °C durchgeführt. Um das Harz zu schonen, werden dabei vorzugsweise Temperaturen von 110 bis 140 °C eingestellt.

Da es bei der adsorptiven Reinigung des Grundwassers mit nicht eingestelltem pH-Wert zu Ablagerungen auf dem Harz kommt, muß in regelmäßigen Abständen eine Entfernung von anorganischen Ablagerungen vorgenommen werden. Säuren, die zur Regenerierung des Adsorberharzes eingesetzt werden können, sind vor allem Mineralsäuren, wie Salz-, Schwefel- und Phosphorsäure. Es können aber auch starke organische Säuren, wie Ameisen- und Essigsäure, verwendet werden. Vorzugsweise setzt man eine 10- bis 20%ige Salzsäure ein und regeneriert bei 20 bis 80 °C. Hierbei wird ein sauerstoffhaltiges Gas, bevorzugt Luft, im Gegenstrom eingeleitet.

Die Regenerierung ist nicht nach jedem Adsorptions-Desorptions-Zyklus erforderlich, sondern erst dann, wenn die Adsorptionskapazität des Harzes nachläßt. Eine Regenerierung wird meist nach 30 bis 80 Zyklen vorgenommen, wobei bei einem sauren seltener als bei einem neutralen Grundwasser regeneriert werden muß.

Wenn das Grundwasser das Adsorberharz in einer Säule beispielsweise von unten nach oben durchströmt, so wird der Wasserdampf während der Desorptionsphase vorzugsweise in Gegenrichtung, also von oben nach unten, geführt. Bei der Regenerierung wird das sauerstoffhaltige Gas unterhalb der Harzschicht eingeleitet.

Nach dem vorliegenden Verfahren können Gehalte an Ethern und polycyclischen aromatischen Kohlenwasserstoffen von beispielsweise 1,5 mg/l auf unter 10 µg/l reduziert werden. Das gereinigte Grundwasser kann ohne Bedenken fließenden Oberflächengewässern zugegeben werden. Es kann bei niedrigem Salzgehalt als Kühlwasser eingesetzt und nach biologischer Reinigung als Trinkwasser verwendet werden.

Hohe Standzeiten des Harzes werden erreicht, da unvermeidliche Ausfällungen von anorganischen Ablagerungen am Adsorberharz durch regelmäßiges Spülen mit wäßriger Säure wieder entfernt werden.

Das folgende Beispiel soll die Erfindung verdeutlichen.

### Beispiel 1

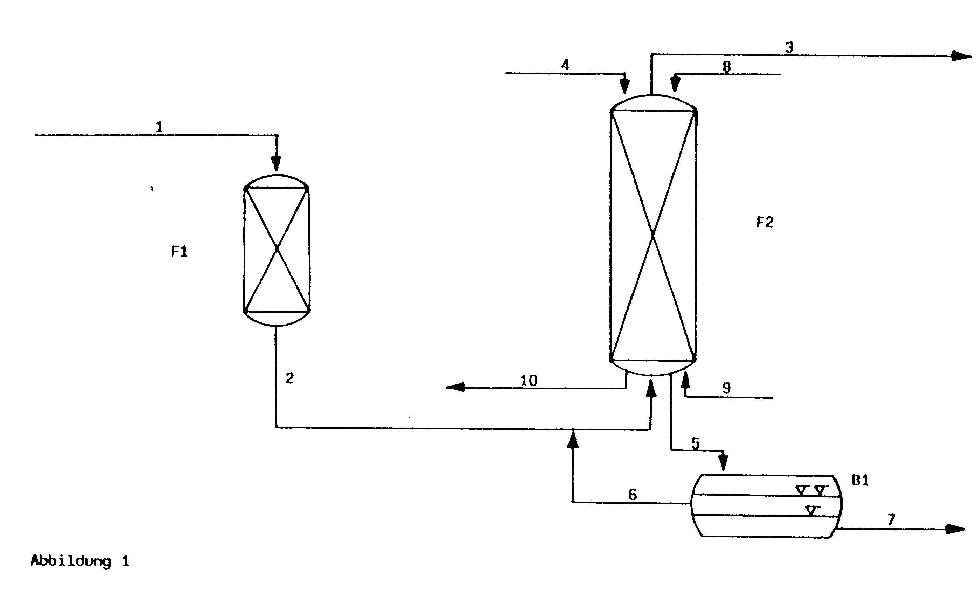

Gemäß Abbildung 1 wird Rohgrundwasser mit einem pH-Wert von 7,1 über Leitung 1 auf das Feststoff-Filter F1 gegeben. Das aus dem Filter über Leitung 2 heraustretende, von Schwebstoffen befreite Grundwasser, das 1 mg/l polycyclische aromatische Kohlenwasserstoffe (PAK) und 50 mg/l Di(chlorisopropyl)ether aufweist, wird bei 20 °C und einem Volumenstrom von 30 l/h in den Adsorber F2 geleitet. Der Adsorber hat einen Innendurchmesser von 4 cm und eine Höhe von 150 cm und ist mit 1 kg Divinylbenzol/Styrol-Copolymer mit einer spezifischen Oberfläche von 800 m²/g (PURASORB® AP 250 der Fa. Purolite, D-40882 Ratingen) gefüllt. Über Leitung 3 erhält man ein gereinigtes Grundwasser mit < 1 µg/l PAK und < 20 µg/l Di(chlorisopropyl)ether.

Nach einer Laufzeit von 15 Stunden wird die Grundwasserzufuhr zu F2 unterbrochen und Wasserdampf von 130 °C über Leitung 4 in einer Menge, die 0,5 % des gereinigten Wassers entspricht, auf den Adsorber gegeben. Das über Leitung 5 auslaufende Eluat wird im Phasentrennbehälter B 1 getrennt, wobei die obere wäßrige Phase über Leitung 6 zurückgeführt und die untere organische Phase über Leitung 7 ausgetragen wird.

Nach 35 Adsorptions-Desorptions-Zyklen wird das Adsorptionsbett dadurch regeneriert, daß man 20%ige Salzsäure über Leitung 8 auf den 70 ° C heißen Adsorber gibt und gleichzeitig Luft im Gegenstrom über Leitung 9 einleitet. Die beladene Säurelösung wird über Leitung 10 abgeführt.

## Patentansprüche

1. Verfahren zur Entfernung von Ethern und polycyclischen aromatischen Kohlenwasserstoffen aus Grundwasser, wobei feste Bestandteile abgetrennt, die obengenannten organischen Verbindungen an ein Adsorberharz adsorbiert und dann mit Wasserdampf desorbiert werden,
dadurch gekennzeichnet,
daß man das Adsorberharz nach der Desorption mit Wasserdampf mit einer Säure regeneriert.

2. Verfahren nach Anspruch 1,
dadurch gekennzeichnet,
daß die festen Bestandteile bei einem pH-Wert von 1 bis 10, vorzugsweise von 3 bis 7,5, abgetrennt werden.

3. Verfahren nach Anspruch 1,
dadurch gekennzeichnet,
daß das Adsorberharz ein Divinylbenzol/Styrol-Copolymer mit einer spezifischen Oberfläche von 600 bis 1 200 m²/g ist.

4. Verfahren nach Anspruch 1,
dadurch gekennzeichnet,
daß die Desorption bei 100 bis 150 °C, vorzugsweise bei 110 bis 140 °C, erfolgt.

5. Verfahren nach Anspruch 1,
dadurch gekennzeichnet,
daß mit einer 10- bis 20%igen wäßrigen Salzsäure bei 20 bis 80 °C regeneriert wird.

## Claims

1. A process for removing ethers and polycyclic aromatic hydrocarbons from groundwater, solid constituents being separated off, the abovementioned organic compounds being adsorbed to an adsorber resin and then being desorbed with steam, characterized in that after the desorption with steam, the adsorber resin is regenerated with an acid.

2. A process according to claim 1, characterized in that the solid constituents are separated off at a pH of 1 to 10, preferably 3 to 7.5.

3. A process according to claim 1, characterized in that the adsorber resin is a divinylbenzene/ styrene copolymer having a specific surface area of 600 to 1200 m²/g.

4. A process according to claim 1, characterized in that the desorption is performed at 100 to 150°C, preferably at 110 to 140°C.

5. A process according to claim 1, characterized in that regeneration is performed with a 10 to 20% strength aqueous hydrochloric acid at 20 to 80°C.

## Revendications

1. Procédé d'élimination d'éthers et d'hydrocarbures aromatiques polycycliques des eaux souterraines, dans lequel on sépare des constituants solides, on adsorbe les composés organiques mentionnés ci-dessus sur une résine de l'adsorbeur et ensuite on désorbe avec de la vapeur d'eau,
caractérisé en ce qu'
on régénère la résine de l'adsorbeur après la désorption avec de la vapeur d'eau, avec un acide.

2. Procédé selon la revendication 1,
caractérisé en ce que
les constituants solides sont séparés à une valeur de pH allant de 1 à 10, de préférence de 3 à 7,5.

3. Procédé selon la revendication 1,
caractérisé en ce que
la résine de l'adsorbeur est un copolymère divinylbenzène/styrène ayant une surface spécifique de 600 à 1200 m²/g.

4. Procédé selon la revendication 1,
caractérisé en ce que
la désorption s'effectue à 100 à 150°C, de préférence à 110 à 140°C.

5. Procédé selon la revendication 1,
caractérisé en ce qu'
on régénère à 20 à 80°C avec un acide chlorhydrique aqueux à 10 à 20 %.
